# EUROPEAN PATENT SPECIFICATION

(11) **EP 0 960 678 B1**
(45) Date of publication and mention of the grant of the patent: **03.07.2002**
(21) Application number: 99103631.0
(22) Date of filing: 25.02.1999
(51) Int. Cl.: B23D 31/00

(54) **Bending-shearing machine**
Vorrichtung zum Biegen und Schneiden
Dispositif pour plier et couper

(30) Priority: 29.05.1998 IT VE980022
(43) Date of publication of application: 01.12.1999
(73) Proprietor: DALLAN S.P.A., 31033 Castelfranco Veneto (IT)
(72) Inventor: Dallan, Sergio, 31033 Castelfranco (VE) (IT)
(74) Representative: Piovesana, Paolo

(56) References cited:
- EP-A- 0 679 455
- US-A- 4 836 004

## Description

This invention relates to a bending-shearing machine.

Manual or automatic machines are known through which a workpiece is passed repeatedly to form bent parts.

These known machines have however the drawback or laborious operation due to the repeated passage of the workpiece, which lengthens the formation time.

Shearing and bending dies for individual workpieces are also known.

These dies have the drawback of production rigidity and high cost due to the need to possess a die for each part to be formed. Automatic bending machines provided with a double bender are also known, these enabling the workpiece to be bent in two directions to form bent parts.

These known bending machines have however the drawback of high cost and the ability to be used only on sheet metal pieces which have been previously cut.

The machine disclosed in EP-A-0 679 455 allows to eliminate the drawback jointly and separately present in known equipment by providing a machine which enables a transverse bend to be made in the two directions on a continuous profile, possibly punched or otherwise worked to form metal parts and accessories in general.

It further allows to provide a machine which enables the shaped part obtained to be sheared off after bending.

The object of the invention is to provide a simpler configuration of a bending-shearing machine, as described in claim 1

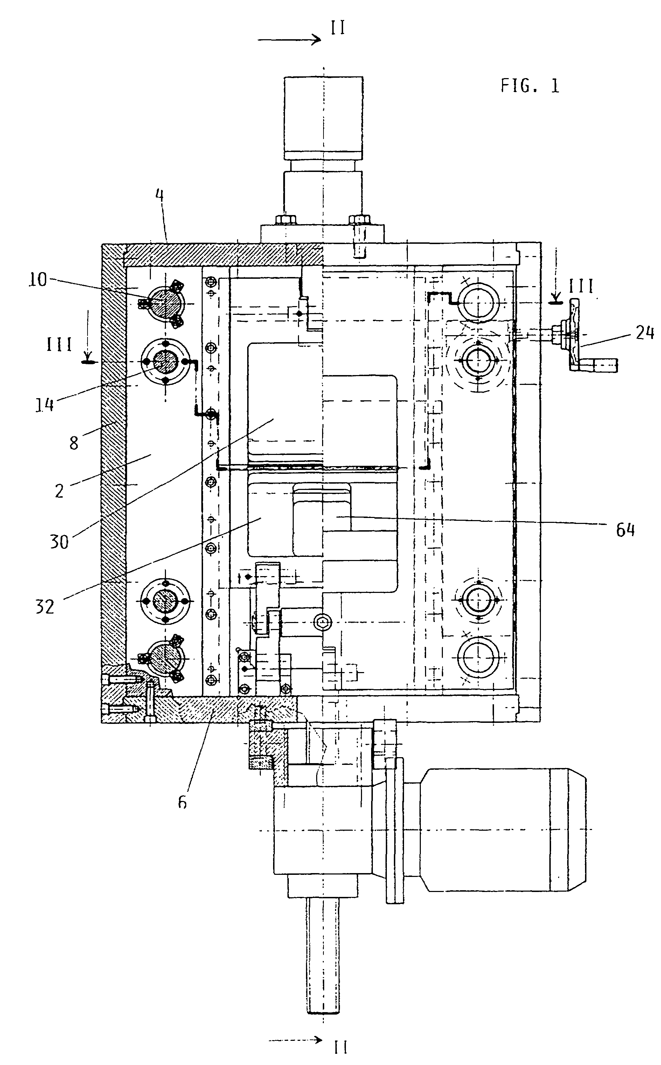

A preferred embodiment of the invention is described in detail hereinafter with reference to the accompanying drawing, on which
- Figure 1: is a partly sectional front view of a bending-shearing machine of the invention;

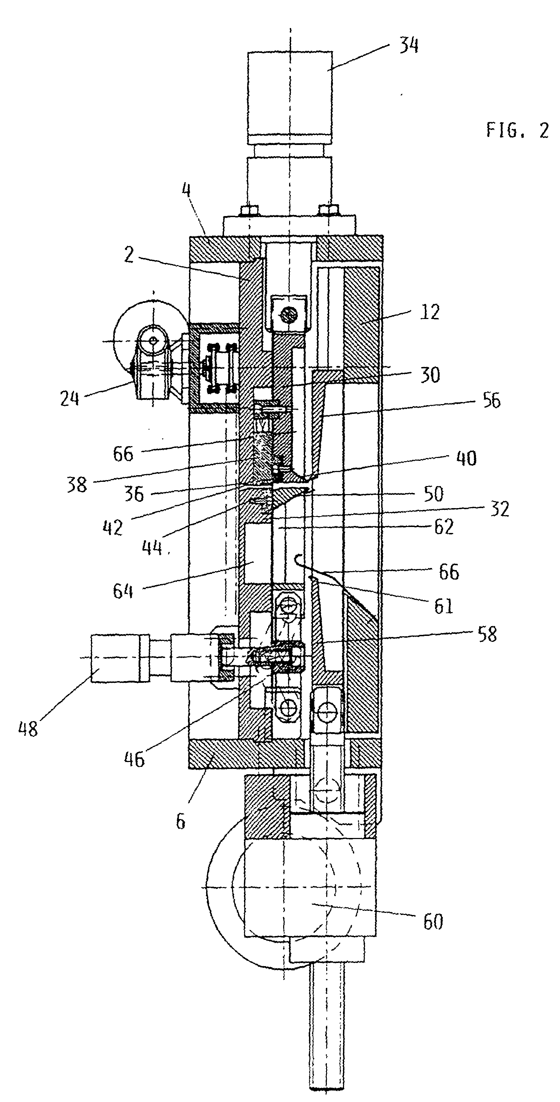

- Figure 2: is a longitudinal section therethrough on the line II-II of Figure 1; and

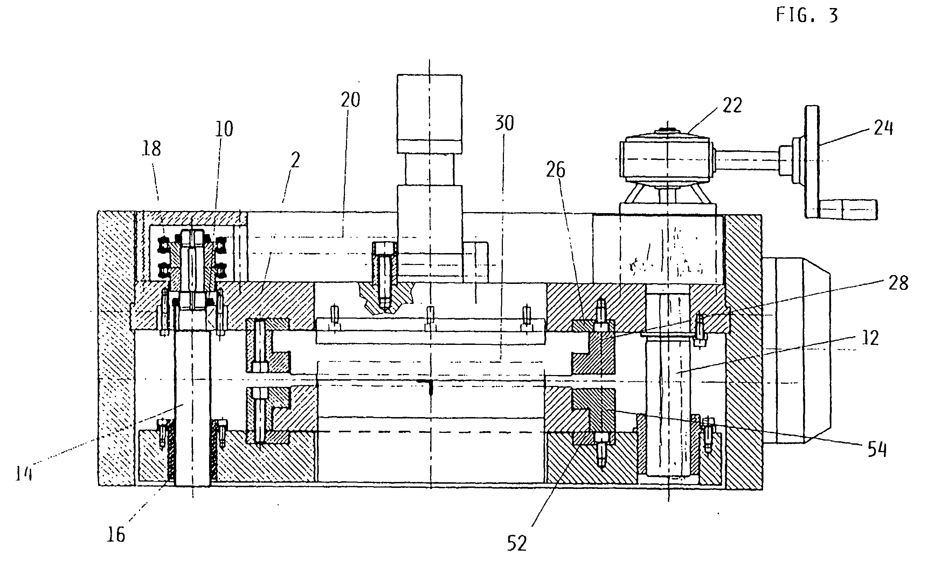

- Figure 3: is a cross-section therethrough on the line III-III of Figure 1.

As can be seen from the figures, the bending-shearing machine of the invention comprises substantially a baseplate 2 to which there are welded an upper surround plate 4, a lower surround plate 6 and lateral sorround plates 8. Said unit is positioned substantially downstream of a strip metal feed unit or a punching machine.

Four columns 10 are provided rigid with the baseplate 2 to guide a counterplate 12 movable away from an towards the plate 2 by a system of lead screws 14 and nut screws 16.

Specifically, to the heads of the screws 14 there are keyed sprocket wheels 18 connected by a chain 20 driven by a geared motor 22 or by a crank 24.

On the baseplate 2 there are fixed guides 26 and 28 for an upper presser element 30, the upper free end of which is faced by a counter-presser 32.

The upper presser 30 is rigid with the rod of a hydraulic cylinder-piston unit 34 and comprises on one side of its free end an upper cutting die 36 slightly inclined to provide shear-type cutting and an elastic presser 38 to lock the strip during shearing, and on the other side an upper locking lip 40. The baseplate 2 comprises a slot 42, in correspondence with which there is provided a lower shearing die 44 cooperating with the upper die 36.

The counter-presser 32 is movable vertically under the control of a system of toggle connecting rods 46 operated by a hydraulic cylinder-piston lip 50 cooperating with the upper lip 40.

Guides 52, 54 are provided on the counterplate for a system consisting of an upper bender 56 and an opposing lower bender 58 which are driven synchronously by a geared motor 60 and are provided at their ends with appendices 61 facing the fixed plate 2. In certain cases the two benders could move independently of each other.

To allow more extensive bending with the possibility of double bending, and to also provide for under-bending, the central part of the counter-presser 32, the baseplate 2 and the upper presser 30 comprise relief apertures 62, 64 and 66 respectively.

The bending-shearing machine of the invention operates in the following manner:
the strip is fed in a controlled manner under the control of a control unit (not shown on the drawings) which also controls all the drive members for the movable components of the machine.

During bending, by way the toggle connecting rod system 46 the piston 48 moves the lower lip 50 substantially to a level just higher than the level of the aperture 42 to enable the metal strip to rest on it without being in contact with the lower shearing die 44. The hydraulic cylinder-piston unit 34 lowers the upper presser 30 and the upper lip 40 which with the lower lip 50 retains the metal strip interposed between them.

Depending on the programmed operation, the geared motor 60 is operated to raise (lower) the lower bending element 58 (upper bending element 56) which bend the metal strip by means of their turned-over appendices 61.

Moreover, as the upper lip 40 and lower lip 50 project a certain distance beyond the surface of the upper presser 30 and of the counter-presser 32, and because of the provision of the turned-over appendices 61 of the bending elements 56 and 58 under-folds can be formed in accordance with a programmed sequence of movements of the bending elements and of withdrawal and approach movements of the counterplate 12 from and to the fixed plate 2.

These movements of the counterplate 12, achieved by operating the system comprising the geared motor 22, chain 20, sprocket wheel 18, lead screws 14 and nut screws 16. also enables metal strips of different thicknesses to be bent.

When the piece of strip has been bent to the desired shape, the counter-presser 32 is lowered, after which the hydraulic piston 34 is operated to lower the presser 30 which initially, by means of its elastic presser 38, retains the metal strip against the lower bearing surface provided by the counter-presser, and then causes the lower and upper dies 36 and 44 to cut the strip.

An elastic blade 66 receives the stamped part.

From the aforegoing it is apparent that the bending-shearing machine of the invention has numerous advantages, and in particular
- it enables transverse bending to be effected in the two directions on a continuous profile to form metal parts and accessories in general
- it enables the shaped part obtained to be sheared off.

## Claims

1. A bending-shearing machine comprising:
- a baseplate (2) comprising a passage slot (42) for a metal strip,
- a pair of facing vertical presser elements (30,32) positioned on opposite sides of the slot and provided at their ends with members (36,38,40,44/50) for retaining and cutting the metal strip,
- means (34.48,46) for axially driving said presser elements,
- a counterplate (12) movable from and towards the baseplate (2),
- a pair of bending elements (56.58) mounted on said counterplate and movable axially from and towards that portion of metal strip projecting beyond the presser elements.
- means (60) for driving said presser elements,
- a control unit which controls the movement of the presser elements and bending elements in accordance with programmed logic, and regulates the distance between the plate and counterplate.

2. A machine as claimed in claim 1, **characterised in that** four columns (14) rigid with the baseplate (2) are provided for guiding the movable counterplate (12), which is driven by a system of lead screws (14) mounted on the fixed base and engaging corresponding nut screws (16) mounted on the movable plate.

3. A machine as claimed in claim 2, **characterised in that** sprocket wheels (18) are keyed on the head of the lead screws (14) and are connected by a chain (20) driven by a geared motor (22).

4. A machine as claimed in claim 1 **characterised in that** the upper presser (30) is rigid with the rod of a hydraulic cylinder-piston unit (34) and at its free end comprises an upper cutting die (36) and a locking lip (40)

5. A machine as claimed in claim 1 or 4, **characterised in that** the baseplate is provided with a lower shearing die (50) cooperating with the upper die (36).

6. A machine as claimed in claim 1, **characterised in that** the upper presser (32) is movable vertically under the control of a system of toggle connecting rods (46) operated by a hydraulic cylinder-piston unit (48), and is provided with a lower locking lip (50) cooperating with the upper lip (40).

7. A machine as claimed in claim 1, **characterised in that** the bending elements (56,58) are driven synchronously by a geared motor (60) and are provided at their ends with appendices (61) facing the fixed plate (2).

## Patentansprüche

1. Vorrichtung zum Biegen und Schneiden, mit:
- einer Basisplatte (2) mit einem Durchgangsschlitz (42) für einen Metallstreifen,
- einem Paar einander zugewandter, vertikaler Presselemente (30, 32), die auf entgegengesetzten Seiten des Schlitzes angeordnet und an ihren Enden mit Bauteilen (36, 38, 40, 44/50) zum Halten und Schneiden des Metallstreifens versehen sind,
- einer Einrichtung (34, 48, 46) zum axialen Antreiben der Presselemente,
- einer Gegenplatte (12), die von der Basisplatte (2) weg und zu ihr hin beweglich ist,
- einem Paar Biegeelemente (56, 58), die an der Gegenplatte befestigt und axial von dem Abschnitt des Metallstreifens, der sich über die Presselemente hinaus erstreckt, weg und zu diesem hin beweglich sind,
- einer Einrichtung (60) zum Antreiben der Presselemente,
- einer Steuerungseinheit, welche die Bewegung der Presselemente und der Biegeelemente gemäß einer programmierten Logik steuert und den Abstand zwischen der Platte und der Gegenplatte einregelt.

2. Vorrichtung nach Anspruch 1, **dadurch gekennzeichnet, dass** vier Säulen (14) starr mit der Basisplatte (2) vorgesehen sind, um die bewegliche Gegenplatte (12) zu führen, welche durch ein System von Führungsschrauben (14) angetrieben wird, die an der fixierten Basis befestigt sind und mit entsprechenden Muttern (16) eingreifen, die an der beweglichen Platte befestigt sind.

3. Vorrichtung nach Anspruch 2, **dadurch gekennzeichnet, dass** Kettenräder (18) an dem Kopf der Führungsschrauben (14) verstiftet bzw. verkeilt sind und durch eine Kette (20) verbunden sind, die durch einen Vorgelegemotor (22) angetrieben wird.

4. Vorrichtung nach Anspruch 1, **dadurch gekennzeichnet, dass** das obere Presselement (30) starr mit der Stange einer hydraulischen Kolbenzylindereinheit (34) verbunden ist und an seinem freien Ende eine obere Schneideform (36) und eine Sperrlippe (40) aufweist.

5. Vorrichtung nach Anspruch 1 oder 4, **dadurch gekennzeichnet, dass** die Basisplatte mit einer unteren Schneideform (50) versehen ist, die mit der oberen Form (36) zusammenarbeitet.

6. Vorrichtung nach Anspruch 1, **dadurch gekennzeichnet, dass** das obere Presselement (32) vertikal unter der Kontrolle eines Systems von Kniehebel-Verbindungsstangen (46) beweglich ist, die durch eine hydraulische Kolbenzylindereinheit (48) betätigt werden, und das es mit einer unteren Sperrlippe (50) versehen ist, die mit der oberen Lippe (40) zusammenwirkt.

7. Vorrichtung nach Anspruch 1, **dadurch gekennzeichnet, dass** die Biegeelemente (56, 58) synchron durch einen Vorgelegemotor (60) angetrieben werden und an ihrem Ende mit Fortsätzen (61) versehen sind, welche der fixierten Platte (2) zugewandt sind.

## Revendications

1. Une machine de pliage et de cisaillage comprenant :
- une plaque de base (2) comprenant une fente (42) de passage d'une bande de métal,
- une paire d'éléments verticaux de pression (30, 32) en regard l'un de l'autre, placés sur des côtés opposés de la fente et pourvus à leurs extrémités d'éléments (36, 38, 40, 44/50) de retenue et de coupe de la bande de métal,
- des moyens (34, 48, 46) d'entraînement axial desdits éléments de pression,
- une contreplaque (12) mobile vers la plaque de base (2) et à l'opposé de celle-ci,
- une paire d'éléments de pliage (56, 58) montés sur ladite contreplaque et déplaçables axialement vers et à l'opposé de la partie de la bande de métal qui s'étend au-delà des éléments de pression,
- des moyens (60) d'entraînement desdits éléments de pression,
- une unité de commande du déplacement des éléments de pression et des éléments de pliage conformément à une logique programmée, et de réglage de la distance entre la plaque et la contreplaque.

2. Une machine comme revendiquée en revendication 1, **caractérisée en ce que** quatre colonnes (14) solidaires de la plaque de base (2) sont prévues pour guider la contreplaque mobile (12) qui est entraînée par un système de vis menantes (14) montées sur la base fixe et engageant des vis écrous correspondantes (16) montées sur la plaque mobile.

3. Une machine comme revendiquée en revendication 2, **caractérisée en ce que** des roues dentées (18) sont clavetées sur la tête des vis menantes (14) et sont reliées par une chaîne (20) entraînée par un motoréducteur (22).

4. Une machine comme revendiquée en revendication 1, **caractérisée en ce que** l'élément de pression supérieur (30) est solidaire de la tige d'une unité cylindre-piston hydraulique (34) et comprend à son extrémité libre une matrice supérieure de coupe (36) et une lèvre de verrouillage (40).

5. Une machine comme revendiquée en revendication 1 ou 4, **caractérisée en ce que** la plaque de base est pourvue d'une matrice de cisaillage inférieure (50) coopérant avec la matrice supérieure (36).

6. Une machine comme revendiquée en revendication 1, **caractérisée en ce que** l'élément de pression supérieur (32) est déplaçable verticalement sous commande d'un système de tiges de liaison à genouillère (46) actionné par une unité cylindre-piston hydraulique (48) et est pourvu d'une lèvre de verrouillage inférieure (50) coopérant avec la lèvre supérieure (40).

7. Une machine comme revendiquée en revendication 1, **caractérisée en ce que** les éléments de pliage (56, 58) sont entraînés en synchronisme par un motoréducteur (60) et sont pourvus à leurs extrémités d'appendices (61) en regard de la plaque fixe (2).
